# EUROPÄISCHE PATENTANMELDUNG

(11) **EP 1 148 568 A2**
(43) Veröffentlichungstag der Anmeldung: **24.10.2001**
(21) Anmeldenummer: 01108595.8
(22) Anmeldetag: 05.04.2001
(51) Int. Cl.: H01M 8/04, H01M 8/06

(54) **Vorrichtung zum Ausgleichen von Konzentrationsschwankungen in Brennstoffzellensystemen**

(30) Priorität: 20.04.2000 DE 10019772
(71) Anmelder: XCELLSIS GmbH, 73230 Kirchheim/Teck-Nabern (DE)
(72) Erfinder: Klein, Christian, 73230 Kirchheim u.R. (DE); Schüssler, Martin, Dr., 89073 Ulm (DE)
(74) Vertreter: Kocher, Klaus-Peter Dipl.-Phys

(57) **Zusammenfassung**

Die Erfindung betrifft eine Vorrichtung zum Ausgleichen von Konzentrationsschwankungen eines Gasbestandteiles im Brenngasstrom eines dynamisch betriebenen Brennstoffzellensystems, wobei stromab einer zu schützenden Komponente des Brennstoffzellensystems eine direkt im Brenngasstrom angeordnete Pufferkomponente vorgesehen ist, welche bei einer Erhöhung des Partialdruckes den Gasbestandteil aus dem Brenngasstrom aufnimmt und beim Abfall des Partialdruckes den Gasbestandteil wieder an den Brenngasstrom abgibt. Erfindungsgemäß wird vorgeschlagen, daß die Pufferkomponente ein Material zur Adsorption oder Absorption des Gasbestandteiles mit einer vom Partialdruck abhängigen Aufnahmekapazität enthält.

## Beschreibung

Die Erfindung betrifft eine Vorrichtung zum Ausgleichen von Konzentrationsschwankungen eines Gasbestandteiles im Brenngasstrom eines dynamisch betriebenen Brennstoffzellensystems gemäß den Merkmalen im Oberbegriff des Patentanspruchs 1.

Im dynamischen Betrieb, beim Warmstart oder auch bei Störungen treten in Brennstoffzellensystemen Konzentrationsschwankungen im Brenngasstrom vor und hinter der Anode der Brennstoffzelle auf. Diese führen im Fall von überhöhten Kohlenmonoxid-Konzentrationen zur Vergiftung von Edelmetallkatalysatoren in der Brennstoffzelle oder in einer Gasreinigungsstufe zur selektiven katalytischen Oxidation des Kohlenmonoxids. Bei Schwankungen in der Wasserdampf-Konzentration kann es zu Gleichgewichtsverschiebungen bei der Wassergas-Shiftreaktion oder auch zu Kondensationsproblemen kommen. Starke Abweichungen in der Wasserstoff-Konzentration im Brennstoffzellenabgas führen schließlich zu Temperaturschwankungen in einem nachgeschalteten katalytischen Brenner und gegebenenfalls in den mit Brennerabwärme beheizten Reaktoren. Solche Konzentrationsschwankungen sind also unerwünscht, da sie die Systemdynamik begrenzen oder den Regelaufwand erhöhen. Außerdem können sie Komponenten im Brennstoffzellensystem zerstören oder zusätzliche Komponenten erforderlich machen.

Aus der GB 2 268 322 A ist ein Brennstoffzellensystem mit einem Reformierungsreaktor und einer Brennstoffzelle bekannt, wobei zwischen dem Reformierungsreaktor und der Brennstoffzelle ein Wasserstoffspeicher angeordnet ist. Der Wasserstoffspeicher enthält eine protonenleitende Membran, die auf einer Seite mit dem Brenngasstrom des Brennstoffzellensystems beaufschlagt ist und auf der gegenüberliegenden Seite einen mit einer Wasserstoffspeicherlegierung gefüllten Raum begrenzt. Durch Anlegen einer Spannung an die protonenleitende Membran wird Wasserstoff in Abhängigkeit von den auf beiden Seiten herrschenden Partialdrücken durch die Membran gepumpt. Die gewünschte Druckdifferenz kann durch die Wahl der angelegten Spannung vorgegeben werden. Somit wird abhängig vom Partialdruck im Brenngasstrom Wasserstoff aus dem Brenngasstrom in die Speicherlegierung hinein oder aus der Speicherlegierung heraus in den Brenngasstrom transportiert.

Aufgabe der Erfindung ist es, eine Vorrichtung zu schaffen, mit der Konzentrationsschwankungen im Brenngasstrom von Brennstoffzellensystemen einfach und zuverlässig ausgeglichen werden können.

Diese Aufgabe wird durch den Gegenstand des Anspruches 1 gelöst. Vorteilhafte Ausführungen sind Gegenstand weiterer Ansprüche.

Erfindungsgemäß wird direkt im Brenngasstrom stromauf einer zu schützenden Komponente eine Pufferkomponente angeordnet, die ein Material zur Adsorption oder Absorption des Gasbestandteiles mit einer vom Partialdruck abhängigen Aufnahmekapazität enthält. Dadurch können auf einfache Art und Weise Konzentrationsschwankungen im Brenngasstrom des Brennstoffzellensystems abgefangen oder zumindest geglättet werden. Im Falle einer Unterschreitung einer vorgegebenen Konzentration wirkt die Pufferkomponente demnach als Quelle, im Falle einer Überschreitung als Senke. Ein weiterer Vorteil besteht darin, daß die Vorrichtung passiv, das heißt ohne zusätzliche Regelung und die damit verbundenen Stellelemente betrieben werden kann.

In einer vorteilhaften Ausgestaltung ist es auch möglich, daß die Pufferkomponente mehrere Teilkomponenten aufweist, die hinsichtlich einzelner der zu speichernden Gasbestandteile optimiert sind. Somit muß nicht für jeden Gasbestandteil eine separate Pufferkomponente vorgesehen werden, was Vorteile hinsichtlich Platzbedarf, Gewicht und Kosten bringt.

Weitere Vorteile gehen aus den Unteransprüchen und der Beschreibung hervor. Die Erfindung wird nun anhand der beigefügten Zeichnung näher beschrieben. In dieser zeigt
- Fig. 1: ein vereinfachtes Blockschaltbild eines Brennstoffzel- lensystems,
- Fig. 2: eine Adsorptionsisotherme von Kohlenmonoxid auf CuY, gemessen bei einer Temperatur von 30° C, einem Volumen- strom von 0,2 1/min, einer Adsorbermasse von 22,7g CuY und einem Anteil von 0,8 - 5% CO im Prüfgas.

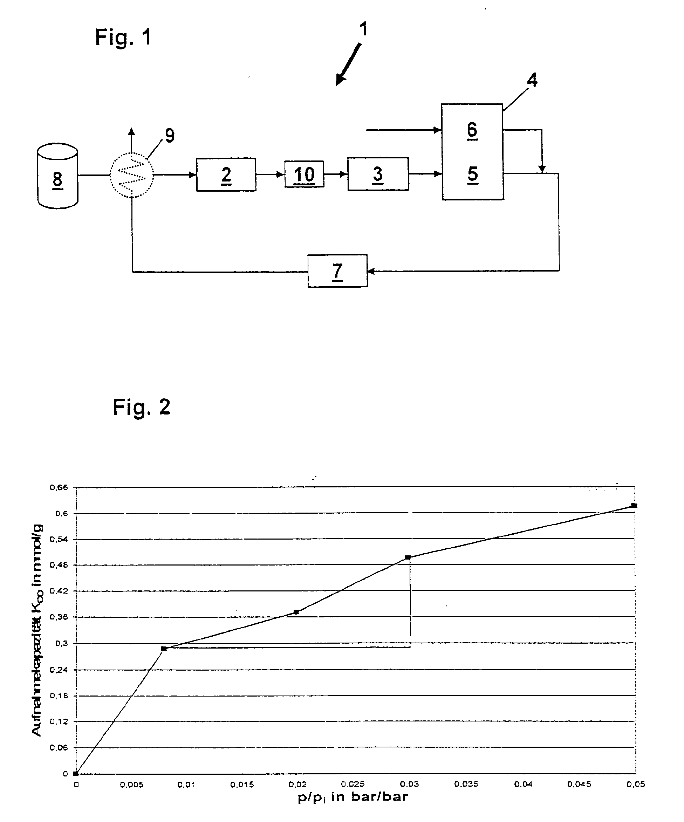

Das insgesamt mit **1** bezeichnete Brennstoffzellensystem gemäß Fig. **1** weist eine Gaserzeugungseinheit **2,** eine Gasreinigungseinheit **3,** eine Brennstoffzelle **4** mit einem Anodenraum **5** und einem Kathodenraum **6** und eine Abgasnachbehandlungseinheit **7** auf. In der Gaserzeugungseinheit wird aus einem Brennstoff mittels partieller Oxidation und/oder Wasserdampfreformierung ein wasserstoffreiches Gas erzeugt. In diesem wasserstoffreichen Gas ist üblicherweise auch Kohlenmonoxid enthalten, welches für die im Anodenraum **5** der Brennstoffzelle **4** vorhandenen Katalysatoren schädlich wirkt. Aus diesem Grund ist zwischen der Gaserzeugungseinheit **2** und dem Anodenraum **5** der Brennstoffzelle **4** eine Gasreinigungseinheit **3** vorgesehen. Hierbei handelt es sich vorzugsweise um eine Vorrichtung zur selektiven katalytischen Oxidation des Kohlenmonoxids unter Zugabe von Sauerstoff. Es können jedoch auch andere geeignete Gasreinigungseinheiten **3,** beispielsweise eine Membranreinigungseinheit, verwendet werden.

Nach dem Durchströmen der Brennstoffzelle **4** wird das Anodenabgas mit der Abluft aus dem Kathodenraum **6** gemischt und der Abgasnachbehandlungseinheit **7** zugeführt. Dort werden an einem geeigneten Katalysator, vorzugsweise einem Edelmetallkatalysator, alle brennbaren Bestandteile der Brennstoffzellenabgase möglichst vollständig umgesetzt. Anstelle des Kathodenabgases kann auch ein anderes sauerstoffhaltiges Gas stromauf der Abgasnachbehandlungseinheit **7** dem Anodenabgas beigemischt werden.

Der Brennstoff wird aus einem Brennstofftank **8** in die Gaserzeugungseinheit **2** geführt. In dem Brennstofftank **8** werden vorzugsweise flüssige Brennstoffe mitgeführt. Alternativ können aber auch gasförmige Brennstoffe verwendet werden, wobei dann der Brennstofftank **8** als Druck- oder Flüssiggasspeicher ausgebildet ist. Bei der Verwendung eines flüssigen Brennstoffes wird üblicherweise zusätzlich eine Verdampfereinheit **9** vorgesehen, die den flüssigen Brennstoff vor dem Eintritt in die Gaserzeugungseinheit **2** in die gasförmige Phase überführt. In dem gezeigten Ausführungsbeispiel wird die Verdampfereinheit **9** durch die heißen Abgase der Abgasnachbehandlungseinheit **7** beheizt. Alternativ ist es jedoch auch möglich, den Verdampfer durch ein anderes Wärmeträgermedium zu beheizen. Möglich ist es auch, die Abgasnachbehandlungseinheit **7** ganz oder teilweise in die Verdampfereinheit **9** zu integrieren.

Solche Brennstoffzellensysteme sind aus dem Stand der Technik vielfältig bekannt und wurden daher vorstehend nur prinzipiell erläutert. Der Schutzbereich soll durch die Art und den Aufbau eines solchen Brennstoffzellensystems nicht eingeschränkt werden.

Stromauf der Gasreinigungsstufe **3** ist erfindungsgemäß eine Pufferkomponente **10** direkt im Brenngasstrom angeordnet. Diese Pufferkomponente **10** wird ständig vom Brenngasstrom durchströmt und enthält ein Material zur Adsorption oder Absorption eines Gasbestandteiles mit einer vom Partialdruck abhängigen Aufnahmekapazität. In dem gezeigten Ausführungsbeispiel dient die Pufferkomponente **10** zum Ausgleich von Schwankungen der Kohlenmonoxid-Konzentration im Brenngasstrom. Im dynamischen Betrieb des Brennstoffzellensystems können nämlich bei Lastwechseln kurzzeitig überhöhte Konzentrationen an Kohlenmonoxid im Brenngasstrom anfallen. Diese könnten zu einer Vergiftung der Edelmetallkatalysatoren in der Gasreinigungsstufe **3** führen.

Die Funktion der Pufferkomponente **10** wird im folgenden anhand von Fig. **2** erläutert, die die Aufnahmekapazität von Kohlenmonoxid in einem Adsorptionsmaterial - hier CuY - in Abhängigkeit vom Partialdruck des Kohlenmonoxids im Brenngasstrom zeigt. Daraus ist zu entnehmen, daß die Aufnahmekapazität mit zunehmendem Partialdruck ansteigt. Durch das in Fig. 2 eingezeichnete Dreieck ist exemplarisch angedeutet, daß die Aufnahmekapazität für Kohlenmonoxid in dem gezeigten Ausführungsbeispiel bei einer Änderung des Kohlenmonoxid-Partialdruckes um den Faktor 4 um rund 75% zunimmt.

Im Betrieb des Brennstoffzellensystems **1** bedeutet dies, daß die Pufferkomponente **10** nach dem Start die dem üblichen Kohlenmonoxid-Partialdruck entsprechende Kohlenmonoxidmenge aufnimmt. Bei konstantem CO-Partialdruck würde anschließend die Belegung der Pufferkomponente **10** ebenfalls konstant bleiben, so daß in der stromab angeordneten Gasreinigungsstufe **3** eine im wesentlichen konstante Kohlenmonoxidmenge entfernt werden muß. Nimmt nun der Kohlenmonoxidanteil im Brenngasstrom aufgrund eines Lastwechsels kurzzeitig zu, so steigt damit der CO-Partialdruck und damit aber auch die Aufnahmekapazität der Pufferkomponente **10.** Somit wird nicht die gesamte zusätzliche Kohlenmonoxidmenge durch die Pufferkomponente **10** zur Gasreinigungsstufe **3** geleitet, sondern zumindest ein Teil dieses zusätzlichen Kohlenmonoxids wird durch die erhöhte Aufnahmekapazität des Adsorptionsmaterials in der Pufferkomponente **10** eingelagert. Somit wird die zusätzliche Belastung der Gasreinigungsstufe **3** reduziert.

Normalisiert sich nach dem Lastwechsel der Kohlenmonxidanteil im Brenngasstrom wieder, so verringert sich entsprechend dem geringeren CO-Partialdruck auch die Aufnahmekapazität der Pufferkomponente **10**, so daß wieder ein Teil des eingelagerten Kohlenmonoxids an den Brenngasstrom abgegeben wird. Insgesamt bleibt also die von der Gasreinigungsstufe **3** zu entfernende Kohlenmonoxidmenge zwar konstant. Allerdings wird die CO-Konzentrationsschwankung durch die Pufferkomponente **10** abgefangen oder zumindest geglättet. Entsprechend kann durch die Pufferkomponente **10** auch eine kurzzeitige Reduzierung des Kohlenmonoxidanteils ausgeglichen werden, wobei hierbei zuerst ein Teil des üblicherweise in die Pufferkomponente **10** eingelagerten Kohlenmonoxids an den Brenngasstrom abgegeben und später nach der Normalisierung des Kohlenmonoxidanteils wieder aufgenommen wird.

Die Pufferkomponente **10** enthält in einer vorteilhaften Ausführung ein Adsorber mit hoher Oberfläche und Cu-haltigem Trägermaterial, z.B. einem Zeolithen. Weitere geeignete Materialien sind Al₂O₃ oder Aktivkohle. Die genannten Materialien eignen sich besonders vorteilhaft für die Adsorption von CO, können aber auch für die Adsorption von Methanol oder Wasser eingesetzt werden.

Die erfindungsgemäße Vorrichtung ist besonders nützlich, wenn bei einer vor Kohlenmonoxid zu schützenden Komponente deren katalytisches Material auf einer metallischen oder keramischen Trägerstruktur (Monolithe, Bleche) befindet, da wegen der hohen Wärmekapazität dieser Strukturen ein Zünden des Katalysators mit CO-haltigem Gas sehr schwierig ist.

Zusätzlich oder auch abweichend vom gezeigten Ausführungsbeispiel kann auch eine entsprechende Pufferkomponente **10** zwischen der Gasreinigungseinheit **3** und der Brennstoffzelle **4** angeordnet werden, um den im Anodenraum **5** der Brennstoffzelle **4** vorgesehenen Edelmetallkatalysator vor einer Vergiftung durch Kohlenmonoxid zu schützen.

Neben der Anwendung für Kohlenmonoxid kann die erfindungsgemäße Lösung aber auch für andere Gasbestandteile im Brenngasstrom des Brennstoffzellensystems angewendet werden. Ein erstes Beispiel hierfür ist die Pufferung von im Brenngasstrom enthaltenen Wasserdampf. In diesem Fall enthält die Pufferkomponente **10** ein für diesen Anwendungsfall optimiertes und zur Adsorption oder Absorption von Wasserdampf geeignetes Material, beispielsweise Aktivkohle, Aluminiumoxid/Tonerde, Silicagel oder ein Zeolithmaterial. Durch Schwankungen in der Wasserdampf-Konzentration kann es vor allem zu Gleichgewichtsverschiebung bei der Wassergas-Shiftreaktion im Reformierungsreaktor **2** oder auch zu Kondensationsproblemen kommen. Daher wird die Pufferkomponente **10** in diesem Fall unmittelbar stromauf oder stromab des Reformierungsreaktors **2** oder eines gegebenenfalls vorhandenen Shiftreaktors angeordnet.

Ein zweites Beispiel ist die Pufferung von im Brenngasstrom enthaltenem Wasserstoff. In diesem Fall enthält die Pufferkomponente **10** ein für diesen Anwendungsfall optimiertes und zur Adsorption oder Absorption von Wasserstoff geeignetes Material, beispielsweise eine Legierung der Zusammensetzung AB, AB₂, A₂B oder AB₅ enthält, wobei A eines der Elemente Magnesium, Calcium, Titan, Zirkon, Vanadin oder Lanthan und B eines der Elemente Mangan, Eisen, Kobalt, Nickel oder Kupfer ist. Durch starke Schwankungen in der Wasserstoffkonzentration stromab der Brennstoffzelle **4** kann es zu Temperaturschwankungen in der katalytischen Abgasnachbehandlungseinheit **7** oder gegebenenfalls in den durch die Abwärme der Abgasnachbehandlungseinheit **7** beheizten Komponenten, beispielsweise dem Verdampfer **9,** kommen. Daher wird die Pufferkomponente **10** in diesem Fall vorzugsweise stromab der Brennstoffzelle **4** angeordnet.

Die einzelnen Bestandteile des Brennstoffzellensystems **1** können selbstverständlich auch mehrstufig ausgeführt sein, wobei in diesem Fall die Pufferkomponente **10** dann entsprechend vor oder nach einer oder mehrerer der Stufen angeordnet werden kann.

Bei Bedarf ist es auch möglich, daß die Pufferkomponente **10** mehrere Teilkomponenten aufweist, die hinsichtlich einzelner der zu speichernden Gasbestandteile optimiert sind. Somit muß nicht für jeden Gasbestandteil eine separate Pufferkomponente **10** vorgesehen werden, was Vorteile hinsichtlich Platzbedarf, Gewicht und Kosten bringt.

Die erfindungsgemäße Vorrichtung weist den Vorteil auf, daß keine aufwendigen Anordnungen notwendig sind. Außerdem kann die Vorrichtung passiv, das heißt ohne zusätzliche Regelung und die damit verbundenen Stellelemente ausgeführt werden.

## Patentansprüche

1. Vorrichtung zum Ausgleichen von Konzentrationsschwankungen eines Gasbestandteiles im Brenngasstrom eines dynamisch betriebenen Brennstoffzellensystems (**1**), wobei stromauf einer zu schützenden Komponente (**2, 3, 4, 7, 9**) des Brennstoffzellensystems (**1**) eine direkt im Brenngasstrom angeordnete Pufferkomponente (**10**) vorgesehen ist, welche bei einer Erhöhung des Partialdruckes den Gasbestandteil aus dem Brenngasstrom aufnimmt und beim Abfall des Partialdruckes den Gasbestandteil wieder an den Brenngasstrom abgibt,
**dadurch gekennzeichnet,**
**daß** die Pufferkomponente (**10**) ein Material zur Adsorption oder Absorption des Gasbestandteiles mit einer vom Partialdruck-abhängigen Aufnahmekapazität enthält.

2. Vorrichtung nach Anspruch 1
**dadurch gekennzeichnet,**
**daß** der zu puffernde Gasbestandteil Kohlenmonoxid ist, wobei die Pufferkomponente (**10**) stromauf einer Gasreinigungsstufe (**3**) zur selektiven katalytischen Oxidation des Kohlenmonoxids oder stromauf einer Brennstoffzelle (**4**) im Brenngasstrom angeordnet ist.

3. Vorrichtung nach Anspruch 2,
**dadurch gekennzeichnet,**
**daß** die Pufferkomponente (**10**) CuY oder CuZSM-5 enthält.

4. Vorrichtung nach Anspruch 1,
**dadurch gekennzeichnet,**
**daß** der zu puffernde Gasbestandteil Wasserdampf ist, wobei die Pufferkomponente (**10**) unmittelbar stromauf oder stromab eines Reformierungsreaktors (**2**) oder einer Shiftstufe im Brenngasstrom angeordnet ist.

5. Vorrichtung nach Anspruch 4,
**dadurch gekennzeichnet,**
**daß** die Pufferkomponente (**10**) Aktivkohle, Aluminiumoxid/Tonerde, Silicagel oder ein Zeolithmaterial enthält.

6. Vorrichtung nach Anspruch 1,
**dadurch gekennzeichnet,**
**daß** der zu puffernde Gasbestandteil Wasserstoff ist, wobei die Pufferkomponente (**10**) stromab einer Brennstoffzelle (**4**) angeordnet ist.

7. Vorrichtung nach Anspruch 6,
**dadurch gekennzeichnet,**
**daß** die Pufferkomponente (**10**) eine Legierung der Zusammensetzung AB, AB₂, A₂B oder AB₅ enthält, wobei A eines der Elemente Magnesium, Calcium, Titan, Zirkon, Vanadin oder Lanthan und B eines der Elemente Mangan, Eisen, Kobalt, Nickel oder Kupfer ist.

8. Vorrichtung nach Anspruch 1,
**dadurch gekennzeichnet,**
**daß** die Pufferkomponente (**10**) mehrere Teilkomponenten aufweist, die hinsichtlich einzelner der zu speichernden Gasbestandteile optimiert sind.
